# EUROPÄISCHE PATENTANMELDUNG

(11) **EP 4 481 718 A1**
(43) Veröffentlichungstag der Anmeldung: **25.12.2024**
(21) Anmeldenummer: 24183006.6
(22) Anmeldetag: 19.06.2024
(51) Int. Cl.: G09F 13/04, G09F 13/10, G09F 13/14, G09F 13/18, G09F 27/00, F21S 9/02, G08B 7/06

(54) **SICHERHEITS- UND/ODER RETTUNGSZEICHENLEUCHTE**

(30) Priorität: 19.06.2023 EP 23180189
(71) Anmelder: din - Dietmar Nocker Facilitymanagement GmbH & Co KG, 4030 Linz (AT)
(72) Erfinder:
(74) Vertreter: Jell, Friedrich

(57) **Zusammenfassung**

Es wird eine Sicherheits- und/oder Rettungszeichenleuchte (1), insbesondere für eine Notbeleuchtungsanlage, gezeigt. Um kompakte Bauverhältnisse und konstruktive Einfachheit zu erreichen, wird vorgeschlagen, dass die optische Linse (24a, 24b) sowohl als Einsatz in der Ausnehmung (23) vorgesehen als auch im optischen Weg (25) zwischen dem Leuchtmittel (2) und einer zweiten, insbesondere unteren, Schmalseite (3b) der Schmalseiten (3a, 3b, 3c, 3d, 3e, 3f) und/oder Piktogrammscheibe (20) angeordnet ist.

## Beschreibung

Die Erfindung betrifft eine Notbeleuchtungsanlage und eine Sicherheits- und/oder Rettungszeichenleuchte, insbesondere für eine Notbeleuchtungsanlage, mit mindestens einem, insbesondere mindestens eine LED aufweisendes, Leuchtmittel, mit zumindest einer Anzeige, die eine Piktogrammscheibe und ein Piktogramm auf dieser Piktogrammscheibe aufweist, mit einer mit dem Leuchtmittel optisch verbundenen, lichtleitenden Platte zur Hinterleuchtung der Anzeige mit dem vom Leuchtmittel abgestrahlten Licht, wobei die lichtleitende Platte Breit- und Schmalseiten und mindestens eine Ausnehmung an der Breitseite aufweist, wobei die Anzeige an einer der Breitseiten der lichtleitenden Platte vorgesehen ist, und mit einer optischen Linse zur Einstellung einer Abstrahlcharakteristik der Sicherheits- und/oder Rettungszeichenleuchte für die Umgebungsbeleuchtung.

Zur Beleuchtung der Umgebung einer Sicherheits- und/oder Rettungszeichenleuchte ist es bekannt (EP2760009A2), über eine zweite untere Schmalseite einer lichtleitenden Platte der Sicherheits- und/oder Rettungszeichenleuchte Licht abzustrahlen. Die lichtleitende Platte ist hierzu mit einem ersten, eine LED aufweisendem Leuchtmittel optisch verbunden, das in eine Ausnehmung an einer Breitseite der lichtleitenden Platte eingesetzt ist.

Zudem weist die Sicherheits- und/oder Rettungszeichenleuchte eine Anzeige auf, die an einer zweiten Breitseite der lichtleitenden Platte angeordnet und von dieser hinterleuchtet wird, wofür ein zweites Leuchtmittel aus einer LED an einer ersten oberen Schmalseite der lichtleitenden Platte angeordnet ist.

Die Hinterleuchtung der Anzeige sowie die Beleuchtung der Umgebung bedarf daher unterschiedlicher Leuchtmittel, welche zudem auch unterschiedlich angeordnet sind - was den konstruktiven Aufwand sowie den Aufwand zur Herstellung/Wartung der Sicherheits- und/oder Rettungszeichenleuchte erhöht.

Hinzu kommt, dass die Umgebungsbeleuchtung der unteren Schmalseite der lichtleitenden Platte mit einer Linse eingestellt werden muss, welche Linse sich im optischen Weg zwischen erstem Leuchtmittel und unteren Schmalseite befindet. Diese Linse wird durch Ausnehmungen in der lichtleitenden Platte ausgebildet - was eine flexible Anpassung der Sicherheits- und/oder Rettungszeichenleuchte an vorgegebene Beleuchtungsbedingungen erschwert.

Es ist daher die Aufgabe der Erfindung, eine Sicherheits- und/oder Rettungszeichenleuchte mit einer hintergrundbeleuchteten Anzeige der eingangs geschilderten Art derart zu verändern, dass diese trotz kompakter Bauverhältnisse und konstruktiver Einfachheit auf verschiedenste Szenarien in der Umgebungsbeleuchtung angepasst werden kann.

Die Erfindung löst die gestellte Aufgabe durch die Merkmale des Anspruchs 1.

Indem die optische Linse als Einsatz in der Ausnehmung vorgesehen ist, kann sich die Möglichkeit eröffnen, entsprechend der von der Sicherheits- und/oder Rettungszeichenleuchte geforderten Umgebungsbeleuchtung eine Linse mit einer dazu passenden Abstrahlcharakteristik einzusetzen. Die erfindungsgemäße Sicherheits- und/oder Rettungszeichenleuchte kann daher flexibel auf verschiedenste Beleuchtungsszenarien vorbereitet werden.

Ist zudem im optischen Weg zwischen dem Leuchtmittel und einer zweiten Schmalseite der Schmalseiten und/oder Piktogrammscheibe angeordnet, können sich zusätzlich an der lichtleitenden Platte angeordnete Leuchtmittel erübrigen und damit die Umgebungsbeleuchtung mit dem Leuchtmittel erfolgen, das auch zur Hinterleuchtung der Anzeige verwendet wird. Vorzugsweise handelt es sich bei der zweiten Schmalseite um die untere Schmalseite der lichtleitenden Platte.

Damit ist eine flexibel anpassbare Sicherheits- und/oder Rettungszeichenleuchte geschaffen, die konstruktiv einfach ist.

Diese Anordnung wird konstruktiv weiter verbessert, indem die Piktogrammscheibe über diese Ausnehmung verläuft und diese damit verschließt, was die Linse auch gegenüber Beschädigungen und Verschmutzungen schützen kann. Die Sicherheits- und/oder Rettungszeichenleuchte kann damit auch standfester sein.

Vorzugsweise durchdringt die Ausnehmung die lichtleitende Platte von einer ersten Breitseite der Breitseiten bis zu einer gegenüberliegenden zweiten Breitseite der Breitseiten durchgehend, um die Montage der Linse weiter zu erleichtern. Die erfindungsgemäße Sicherheits- und/oder Rettungszeichenleuchte ist daher vergleichsweise einfach und kostengünstig herstellbar und aufgrund der Zugänglichkeit der Ausnehmung von beiden Breitseiten auch zu warten.

Bei einer durchgehenden Ausnehmung kann beispielsweise von Vorteil sein, wenn an beiden Breitseiten je eine Anzeige vorgesehen ist, wobei beide Piktogrammscheiben der Anzeigen über die Ausnehmung verlaufen und die Ausnehmung beidseitig verschließen. Die Linse ist derart in der Ausnehmung fixiert - was die Standfestigkeit der Sicherheits- und/oder Rettungszeichenleuchte weiter verbessern kann.

Beispielsweise kann die Umgebungsbeleuchtung weiter verbessert werden, wenn die lichtleitende Platte an einer Breitseite zumindest einen Schlitz mit einem in diesem vorgesehen optischen Reflektor aufweist, wobei dieser Schlitz mit einem ersten Schlitzabschnitt entlang, insbesondere parallel entlang, der zweiten, insbesondere unteren, Schmalseite auf Höhe der Ausnehmung und unter Aussparung der Ausnehmung verläuft, indem der erste Schlitzabschnitt beidseitig mit Abstand vor der Ausnehmung endet. Damit kann ein unerwünschter Lichtaustritt aus der lichtleitenden Platte verhindert werden - was den Lichtstrom durch die Linse und somit die Leuchtdichte an den Flächen der zu beleuchtenden Umgebung erhöht. Zudem ist diese Maßnahme konstruktiv vergleichsweise einfach an einer lichtleitenden Platte vorzusehen. Dies gilt insbesondere, wenn der erste Schlitzabschnitt parallel entlang der zweiten Schmalseite verläuft. Auch kann durch den Abstand vor der Ausnehmung, die Stabilität der lichtleitenden Platte weiter verbessert werden.

Vorstellbar ist, dass je ein weiterer Schlitzabschnitt des Schlitzes entlang mindestens einer stirnseitigen Schmalseite der Platte verläuft, um damit eine unerwünschte Lichtabgabe der Platte noch weiter zu vermindern. Vorzugsweise verläuft der oder verlaufen die weiteren Schlitzabschnitte jeweils parallel entlang der einer oder beider seitlichen Schmalseite. Zudem kann bevorzugt vorgesehen sein, dass der oder die weiteren Schlitzabschnitte an den ersten Schlitzabschnitt anschließen, um die Herstellung zu erleichtern bzw. den Austritt von Licht aus der lichtleitenden Platte zusätzlich niedrig zu halten.

Für vorstehend genannte Vorteile zu den weiteren Schlitzabschnitten kann vorgesehen sein, dass der optische Reflektor zusammen mit der Ausnehmung u-förmig in der lichtleitenden Platte vorgesehen ist.

Die Intensität der Umgebungsbeleuchtung ist weiter erhöhbar, indem beispielsweise das Leuchtmittel der Linse im optischen Weg direkt gegenüberliegt.

Vorzugsweise ist das Leuchtmittel an der ersten, oberen Schmalseite der Platte vorgesehen, die der zweiten, unteren Schmalseite gegenüberliegt. Damit kann unter konstruktiver Einfachheit eine ausreichende optische Kopplung des Leuchtmittels mit der lichtleitenden Platte sichergestellt werden.

Vorzugsweise weist die Ausnehmung an der lichtleitenden Platte eine polierte Oberfläche auf. Diese Oberfläche kann beispielsweise auch flammpoliert sein. Damit kann der Lichtübertritt zwischen lichtleitender Patte und Linse und vice versa verbessert werden. Insbesondere kann vorgesehen sein, dass die lichtleitenden Platte aus einem Acrylglas bestehen. Vorzugsweise wird die Ausnehmung mit einem Lasertrennverfahren in die lichtleitende Platte eingebracht, was auch die flammpolierte Oberfläche sicherstellen kann.

Weist die Ausnehmung eine Nut und die Linse einen zur Nut komplementär ausgebildeten Vorsprung auf, der in die Nut eingreift, kann beispielsweise ermöglicht werden, die Linse exakt in der Ausnehmung zu positionieren. Damit kann unter anderem die Umgebungsbeleuchtung reproduzierbar eingestellt werden.

Vorzugsweise ist die Nut an der Ausnehmung asymmetrisch angeordnet, um eine falsche Positionierung der Linse in der Ausnehmung zu vermeiden. Die Linse kann nur in einer einzigen, vorbestimmten Positionierung in die Ausnehmung eingebracht werden kann.

Sind die lichtleitende Platte und die Anzeige über zumindest eine Klebeverbindung miteinander verbunden, kann dies den Zusammenhalt weiter verbessern. Insbesondere kann sich als Klebeverbindung ein Klebestreifen - und zwar auch durch seine einfache Handhabbarkeit - auszeichnen.

Vorzugsweise verläuft die Klebeverbindung zumindest zwischen der Ausnehmung und zweiter Schmalseite, um damit die Standfestigkeit der Sicherheits- und/oder Rettungszeichenleuchte speziell in diesem Bereich weiter zu erhöhen. Zudem kann diese Klebeverbindung zu deren Formgenauigkeit weiter beitragen.

Eine Kapselung der Linse in der Ausnehmung kann beispielsweise erreicht werden, wenn die Klebeverbindung die Ausnehmung geschlossen umläuft. Dies kann die Linse gegenüber Umwelteinflüssen, wie Feuchtigkeit oder Staub, besonders schützen.

Die Abstrahlcharakteristik kann verbessert eingestellt werden, wenn die Ausnehmung im Bereich der zweiten, unteren Schmalseite angeordnet ist.

Die erfindungsgemäße Sicherheits- und/oder Rettungszeichenleuchte eignet sich somit insbesondere für eine Notbeleuchtungsanlage.

In den Figuren ist beispielsweise der Erfindungsgegenstand anhand mehrere Ausführungsvarianten näher dargestellt. Es zeigen
- Fig. 1: eine Explosionszeichnung zu einer Sicherheits- und Rettungszeichenleuchte,
- Fig. 2: eine abgerissene dreidimensionale Schnittansicht auf Schmalseite der nach Fig. 1 zusammengesetzten Sicherheits- und Rettungszeichenleuchte,
- Fig. 3: eine abgerissene Schnittansicht auf eine Breitseite der nach Fig. 1 zusammengesetzten Sicherheits- und Rettungszeichenleuchte,
- Fig. 4a: die Seitenansicht nach Fig. 2 mit einem eingezeichneten optischen Weg durch eine optische Linse der Sicherheits- und Rettungszeichenleuchte nach einem ersten Ausführungsbeispiel und
- Fig. 4b: die Seitenansicht nach Fig. 2 mit dem eingezeichneten optischen Weg durch eine zweite optische Linse der Sicherheits- und Rettungszeichenleuchte nach einem zweiten Ausführungsbeispiel.

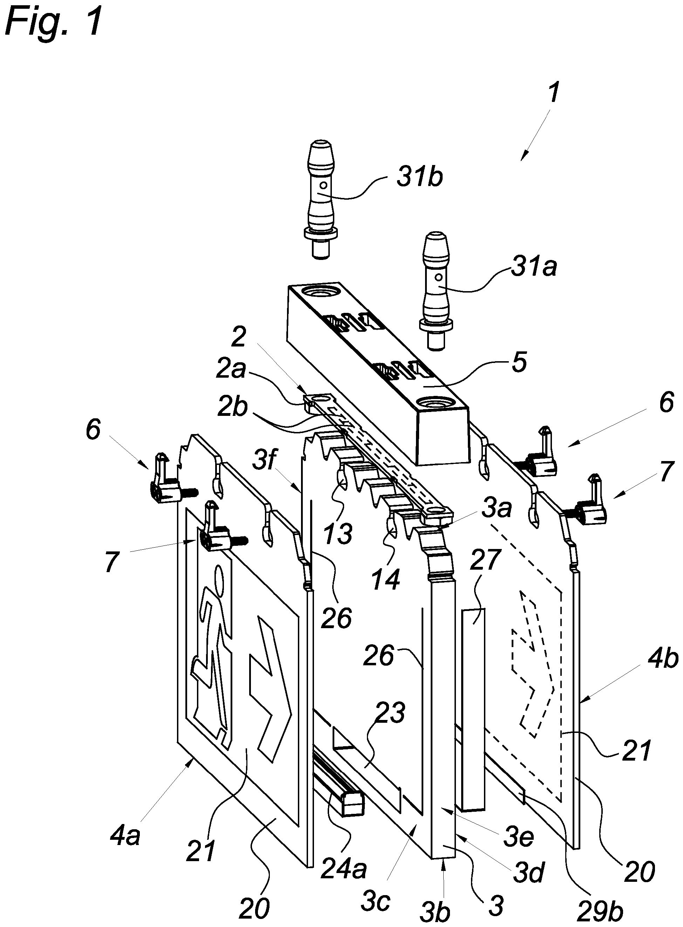

Nach Fig. 1 wird beispielsweise eine Sicherheits- und Rettungszeichenleuchte 1 für eine nicht dargestellte Notbeleuchtungsanlage gezeigt. Bei der Sicherheits- und Rettungszeichenleuchte 1 kann es sich auch um eine Sicherheitsleuchte oder Rettungszeichenleuchte handeln - was nicht näher dargestellt worden ist.

Die Sicherheits- und Rettungszeichenleuchte 1 weist ein erstes Leuchtmittel 2 mit einer Leiste 2a, die mehrere LEDs 2b trägt, auf. Das erste Leuchtmittel 2 ist an der Fläche der ersten oberen Schmalseite 3a einer lichtleitenden Platte 3 vorgesehen und mit der lichtleitenden Platte 3 der Sicherheits- und Rettungszeichenleuchte 1 optisch verbunden. Damit kann diese lichtleitenden Platte 3, beispielsweise aus Kunststoff, zwei, nämlich auf je einer ihrer Breitseiten 3b, 3c vorgesehene, Anzeigen 4a, 4b hinterleuchten.

Die lichtleitende Platte 3 ragt an ihrer oberen Schmalseite 3a in ein Außengehäuse 5 der Sicherheits- und Rettungszeichenleuchte 1 ein. Das längliche Außengehäuse 5 umfasst diese obere Schmalseite 3a vollständig, wie in Fig. 1 zu erkennen ist. Die lichtleitende Platte 3 wird auch in diesem Außengehäuse 5 gehalten. Hierzu weist die Sicherheits- und Rettungszeichenleuchte 1 zwei Halteelemente 6, 7 auf, die zwischen Außengehäuse 5 und Platte 3 vorgesehen sind.

Das Außengehäuse 5 weist zumindest einen, nämlich zwei, Montagehalter 5a, 5b auf, über die Sicherheits- und Rettungszeichenleuchte 1 befestigt werden kann. Die stiftförmigen Montagehalter 5a, 5b dienen beispielsweise auch zur elektrischen Energieversorgung. Ein anders ausgebildeter Montagehalter 5a, 5b ist vorstellbar, beispielsweise ein Seil. Vorzugsweise sind die Montagehalter 5a, 5b im Eckbereich des Außengehäuses 5 angeordnet. Mithilfe der Montagehalter 5a, 5b ist eine stabile und standfeste Montage der Sicherheits- und Rettungszeichenleuchte 1 möglich.

Die beiden Anzeige 4a, 4b bestehen jeweils aus einer Piktogrammscheibe 20 und einem Piktogramm 21, das auf der Piktogrammscheibe 20 beispielsweise durch ein Druckverfahren vorgesehen ist. Die lichtleitende Platte 3 weist zudem im Bereich ihrer zweiten, unteren Schmalseite 3b eine Ausnehmung 23 auf.

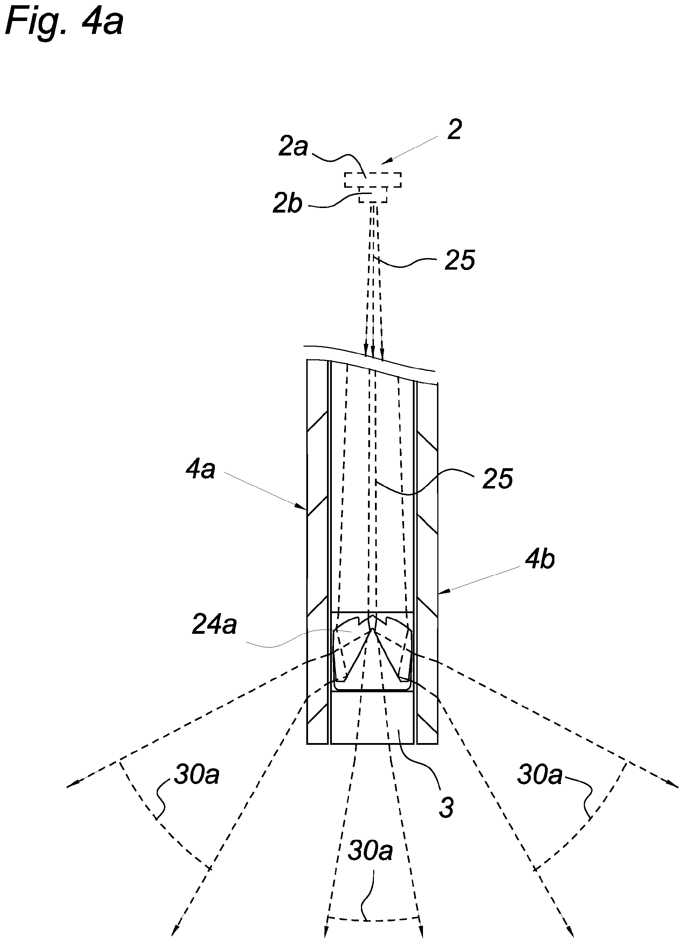

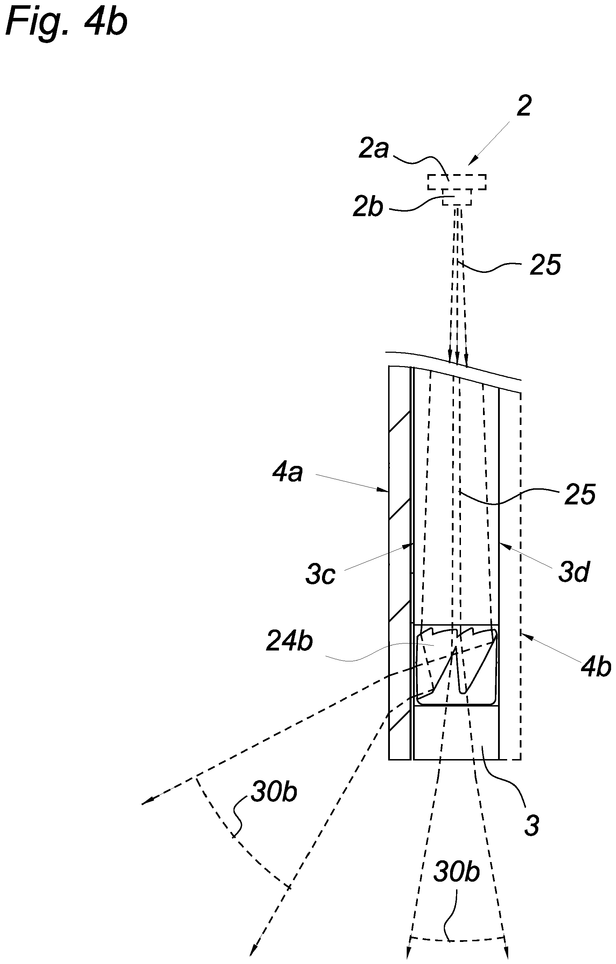

Des Weiteren weist der Sicherheits- und Rettungszeichenleuchte 1 eine optische Linse 24a, 24b auf. Diese optische Linse 24a, 24b dient dazu, die Abstrahlcharakteristik 30a, 30b der Sicherheits- und Rettungszeichenleuchte 1 einzustellen, um die gewünschte Umgebungsbeleuchtung zu schaffen - wie in den Figuren 4a und 4b zu erkennen.

Erfindungsgemäß ist die optische Linse 24a, 24b als Einsatz in der Ausnehmung 23 vorgesehen. Dies erleichtert die Montage der Linse 24a, 24b und eröffnet auch die Option, die notwendige Linse 24a, 24b entsprechend den Voraussetzungen und/oder Vorgaben zur Beleuchtung der Umgebung durch die Sicherheits- und Rettungszeichenleuchte 1 auszuwählen. Die Sicherheits- und Rettungszeichenleuchte 1 ist daher besonders flexibel einsetzbar.

Außerdem ist diese optische Linse 24a, 24b im optischen Weg 25 zwischen dem Leuchtmittel 2 und der zweiten, unteren Schmalseite 3b sowie der Piktogrammscheibe 20 angeordnet, wie in den Figuren 4a und 4b zu erkennen. Die Linse 24a, 24b lenkt nämlich das Licht des Leuchtmittels 2 zur zweiten unteren Schmalseite 3b als auch zur Piktogrammscheibe 20.

Die Linse 24a, 24b liegt im optischen Weg 25 dem ersten Leuchtmittel 2 direkt gegenüber, da diese von diesem Leuchtmittel 2 auch direkt angestrahlt wird - wie in den Figuren 4a und 4b dargestellt. Dadurch kann vorteilhaft eine vergleichsweise hohe Lichtmenge von der Linse 24a, 24b zur Umgebungsbeleuchtung ausgekoppelt werden - auch ist damit die Abstrahlcharakteristik 30a, 30b vorteilhaft einstellbar. So ergibt sich mit der Linse 24a nach Fig. 4a eine symmetrische Abstrahlcharakteristik 30a, wohingegen sich mit der Linse 24b nach Fig. 4b eine asymmetrische Abstrahlcharakteristik 30a ergibt.

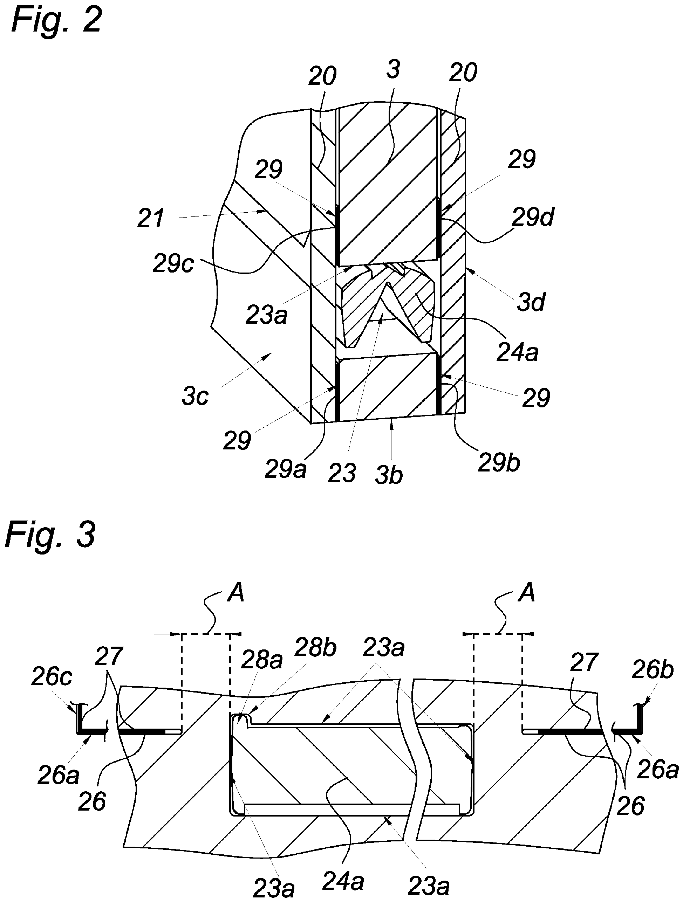

Die Piktogrammscheibe 20 der Anzeigen 4a, 4b verläuft über diese Ausnehmung 23 und verschließt damit diese Ausnehmung 23 - wie in Fig. 2 zu erkennen. Erfindungsgemäß kann damit nicht nur die optische Linse 24a, 24b entsprechend den Anforderungen vorgesehen werden, sondern ist mit der Piktogrammscheibe 20 diese auch mechanisch und gegenüber Verschmutzungen zu schützen.

Im Allgemeinen wird erwähnt, dass unter einer optischen Linse 24a, 24b jedes optische Element zur Erzielung einer Abbildung bzw. zur Veränderung der Abstrahlcharakteristik 30 Sicherheits- und Rettungszeichenleuchte 1 zu Umgebungsbeleuchtung verstanden werden kann. Beispielsweise kann hierzu eine sphärische Linse, Sammellinse, Zerstreuungslinse, Fresnel-Linse, Stufenlinse etc. verwendet werden. Weiter wird im Allgemeinen erwähnt, dass unter Breitseite 3c, 3d einer Platte 3 ihre Front- und/oder Rückseite verstanden werden kann, die durch Schmalseiten 3a, 3b, 3e, 3f voneinander beabstandet sind.

Wie zudem den Figuren 1 und 2 zu entnehmen, durchdringt die Ausnehmung 23 die lichtleitende Platte 3 vollständig, und zwar von der ersten Breitseite 3b bis zur gegenüberliegenden zweiten Breitseite 3c. Beide Piktogrammscheiben 20 der beiden Anzeigen 4a, 4b verlaufen über diese Ausnehmung 23 und verschließt damit diese Ausnehmung 23 beidseitig. Dies vereinfacht die Konstruktion erheblich und erleichtert auch die Montage der Linse 24a, 24b, die damit von beiden Breitseiten 3c, 3d aus in die Ausnehmung 23 eingesetzt werden kann.

Zudem weist die lichtleitende Platte 3 an einer Breitseite 3b zumindest einen Schlitz 26 mit einem in diesem vorgesehenen optischen Reflektor 27 als Spiegel, insbesondere Planspiegel, auf. Dieser Schlitz 26 ist zusammen mit der Ausnehmung 23 u-förmig verlaufend - dies dient der Erhöhung der Leuchtdichte, da die Öffnung der U-Form ist in Richtung des Leuchtmittels 2 der Sicherheits- und/oder Rettungszeichenleuchte orientiert ist. Der Reflektor 27 wird beispielsweise von einer Aluminiumfolie ausgebildet.

Der Schlitz 26 durchdringt die lichtleitende Platte 3. Außerdem verläuft der Schlitz 26 abschnittsweise parallel entlang der zweiten Schmalseite 3b. Die Ausnehmung 23 wird vom Schlitz 26 ausgespart. Der erste Schlitzabschnitt 26a des Schlitzes 26 verläuft zur zweiten Schmalseite 3b parallel und auf Höhe der Ausnehmung 23. Der Schlitz 26 endet allerdings vor der Ausnehmung 23 in einem Abstand A, wie in Fig. 1 und 3 zu entnehmen. Damit verläuft der Schlitz 26 unter Aussparung der Ausnehmung 23, indem der erste Schlitzabschnitt 26a beidseitig mit Abstand A vor der Ausnehmung 23 endet.

Der Schlitz 26 weist zudem zwei weitere Schlitzabschnitte 26b, 26c auf. Davon verläuft ein zweiter Schlitzabschnitt 26b entlang einer seitlichen Schmalseite 3e und ein dritter Schlitzabschnitt 26c entlang einer anderen seitlichen Schmalseite 3f - wie in der Fig. 1 und in der Fig. 3 abgerissen dargestellt zu erkennen.

Des Weiteren ist die Oberfläche 23a der Ausnehmung 23, über die das Licht der Platte 3 zur Linse 24a, 24b austritt oder vice versa eintritt, besonders ausgebildet. Die gesamte Oberfläche 23a der Ausnehmung 23 ist nämlich flammpoliert, was einen vergleichsweise hohen Lichtstrom aus der Platte 3 in die Linse 24a, 24b und vice versa sicherstellt. Diese flammpolierte Oberfläche 23a wird geschaffen, indem die Ausnehmung 23 mit einem Laser aus der aus Acrylglas bestehenden Platte 3 eingebracht wird. Andere Verfahren zum Polieren der Oberfläche 23a sind vorstellbar.

In Fig. 3 ist zu erkennen, dass die Ausnehmung 23 eine quer verlaufende Nut 28a und die Linse 24a, 24b einen zur Nut 28a komplementär ausgebildeten Vorsprung 28b aufweist. Die Nut 28a ist zudem an der Ausnehmung 23 asymmetrisch angeordnet, was eine falsche Positionierung der Linse 24a, 24b verhindert und deren exakte Ausrichtung in der Ausnehmung 23 sicherstellt.

Neben den Halteelementen 6, 7 hält auch eine Klebeverbindung 29 die lichtleitende Platte 3 und die Anzeigen 4a, 4b zusammen. Diese Klebeverbindung 29 ist an beiden Breitseiten 3c, 3d der lichtleitenden Platte 3 und an Piktogrammscheiben 20 der Anzeigen 4a, 4b vorgesehen - und zwar zumindest zwischen der Ausnehmung 23 und zweiter Schmalseite 3b.

Gemäß Fig. 2 ist die Klebeverbindung 29 auch oberhalb der Ausnehmung 23 vorgesehen dargestellt. Diese Klebeverbindung 29 kann auch die Ausnehmung 23 geschlossen umlaufen, um die Ausnehmung zu kapseln und damit die Linse 24a, 24b beispielsweise gegenüber Verschmutzung zu schützen.

Konstruktiv einfach ausgeführt, wird die Klebeverbindung 29 von parallel verlaufenden doppelseitig klebenden Klebestreifen 29a, 29b, 29c, 29d ausgebildet.

Wie in den Figuren 1 bis 4a dargestellt, weist die Sicherheits- und Rettungszeichenleuchte 1 zwei Anzeigen 4a, 4b auf.

Es ist aber auch vorstellbar, dass - wie in Fig. 4b dargestellt - die Sicherheits- und Rettungszeichenleuchte 1 nur eine einzige Anzeige 4a an der ersten Breitseite 3b der lichtleitenden Platte 3 aufweist und auf der zweiten Breitseite 3d beispielsweise an eine Wand montiert werden kann - was nicht dargestellt ist. Es ist aber vorstellbar, dass auch diese Sicherheits- und Rettungszeichenleuchte 1 nach Fig. 4b zwei Anzeigen 4a, 4b aufweist, wovon die zweite Anzeige 4b strichliert dargestellt worden ist.

Im Allgemeinen wird festgehalten, dass "insbesondere" als "more particularly" ins Englische übersetzt werden kann. Ein Merkmal, dem "insbesondere" vorangestellt ist, ist als fakultatives Merkmal zu betrachten, das weggelassen werden kann, und stellt damit keine Einschränkung, beispielsweise der Ansprüche, dar. Das Gleiche gilt für "vorzugsweise", ins Englische übersetzt als "preferably".

## Patentansprüche

1. Sicherheits- und/oder Rettungszeichenleuchte, insbesondere für eine Notbeleuchtungsanlage, mit mindestens einem, insbesondere mindestens eine LED (2b) aufweisendes, Leuchtmittel (2), mit zumindest einer Anzeige (4a, 4b), die eine Piktogrammscheibe (20) und ein Piktogramm (21) auf dieser Piktogrammscheibe (20) aufweist, mit einer mit dem Leuchtmittel (2) optisch verbundenen, lichtleitenden Platte (3) zur Hinterleuchtung der Anzeige (4a, 4b) mit dem vom Leuchtmittel (2) abgestrahlten Licht, wobei die lichtleitende Platte (3) Breit- und Schmalseiten (3a, 3b, 3c, 3d, 3e, 3f) und mindestens eine Ausnehmung (23) an der Breitseite (3c, 3d) aufweist, wobei die Anzeige (4a, 4b) an einer der Breitseiten (3c, 3d) der lichtleitenden Platte (3) vorgesehen ist, und mit einer optischen Linse (24a, 24b) zur Einstellung einer Abstrahlcharakteristik (30a, 30b) der Sicherheits- und/oder Rettungszeichenleuchte (1) für die Umgebungsbeleuchtung, **dadurch gekennzeichnet, dass** die optische Linse (24a, 24b) sowohl als Einsatz in der Ausnehmung (23) vorgesehen als auch im optischen Weg (25) zwischen dem Leuchtmittel (2) und einer zweiten, insbesondere unteren, Schmalseite (3b) der Schmalseiten (3a, 3b, 3c, 3d, 3e, 3f) und/oder Piktogrammscheibe (20) angeordnet ist.

2. Sicherheits- und/oder Rettungszeichenleuchte nach Anspruch 1, **dadurch gekennzeichnet, dass** die Piktogrammscheibe (20) über die Ausnehmung (23) verläuft und diese damit verschließt.

3. Sicherheits- und/oder Rettungszeichenleuchte nach Anspruch 1 oder 2, **dadurch gekennzeichnet, dass** die Ausnehmung (23) die lichtleitende Platte (3) von einer ersten Breitseite (3c) der Breitseiten (3c, 3d) bis zu einer gegenüberliegenden zweiten Breitseite (3d) der Breitseiten (3c, 3d) durchgehend durchdringt.

4. Sicherheits- und/oder Rettungszeichenleuchte nach Anspruch 3, **dadurch gekennzeichnet, dass** an beiden Breitseiten (3b, 3c) je eine Anzeige (4a, 4b) vorgesehen ist, wobei beide Piktogrammscheiben (20) der Anzeigen (4a, 4b) über die Ausnehmung (23) verlaufen und die Ausnehmung (23) beidseitig verschließen.

5. Sicherheits- und/oder Rettungszeichenleuchte nach einem der Ansprüche 1 bis 4, **dadurch gekennzeichnet, dass** die lichtleitende Platte (3) an einer Breitseite (3b, 3c) zumindest einen Schlitz (26) mit einem in diesem vorgesehenen optischen Reflektor (27) aufweist, wobei dieser Schlitz (26) mit einem ersten Schlitzabschnitt (26a) entlang, insbesondere parallel entlang, der zweiten, insbesondere unteren, Schmalseite (3b) auf Höhe der Ausnehmung (23) und unter Aussparung der Ausnehmung (23) verläuft, indem der erste Schlitzabschnitt (26a) beidseitig mit Abstand (A) vor der Ausnehmung (23) endet.

6. Sicherheits- und/oder Rettungszeichenleuchte nach einem der Ansprüche 1 bis 5, **dadurch gekennzeichnet, dass** je ein weiterer, insbesondere an den ersten Schlitzabschnitt (26a) anschließender, Schlitzabschnitt (26b, 26c) des Schlitzes (26) entlang, insbesondere parallel entlang, mindestens einer stirnseitigen Schmalseite (3e, 3f) der lichtleitenden Platte (3) verläuft.

7. Sicherheits- und/oder Rettungszeichenleuchte nach einem der Ansprüche 1 bis 6, **dadurch gekennzeichnet, dass** der optische Reflektor (27) zusammen mit der Ausnehmung (23) u-förmig in der lichtleitenden Platte (3) vorgesehen ist.

8. Sicherheits- und/oder Rettungszeichenleuchte nach einem der Ansprüche 1 bis 7, **dadurch gekennzeichnet, dass** das Leuchtmittel (2) der Linse (24a, 24b) im optischen Weg (25) direkt gegenüberliegt.

9. Sicherheits- und/oder Rettungszeichenleuchte nach Anspruch 8, **dadurch gekennzeichnet, dass** das Leuchtmittel (2) an einer ersten, oberen Schmalseite (3a) der Schmalseiten (3a, 3b, 3c, 3d, 3e, 3f) der Platte (3) vorgesehen ist, die der zweiten, unteren Schmalseite (3b) gegenüberliegt.

10. Sicherheits- und/oder Rettungszeichenleuchte nach einem der Ansprüche 1 bis 9, **dadurch gekennzeichnet, dass** die Ausnehmung (23) an der, insbesondere aus Acrylglas bestehenden, lichtleitenden Platte (3) eine polierte, insbesondere flammpolierte, Oberfläche (23a) aufweist.

11. Sicherheits- und/oder Rettungszeichenleuchte nach einem der Ansprüche 1 bis 10, **dadurch gekennzeichnet, dass** die Ausnehmung (23) eine Nut (28a) und die Linse (24a, 24b) einen zur Nut (28a) komplementär ausgebildeten Vorsprung (28b) aufweist, der in die Nut (28a) zur Positionierung der Linse (24a, 24b) eingreift.

12. Sicherheits- und/oder Rettungszeichenleuchte nach Anspruch 11, **dadurch gekennzeichnet, dass** die Nut (28a) an der Ausnehmung (23) asymmetrisch angeordnet ist.

13. Sicherheits- und/oder Rettungszeichenleuchte nach einem der Ansprüche 1 bis 12, **dadurch gekennzeichnet, dass** die lichtleitende Platte (3) und die Anzeige (4a, 4b) über zumindest eine Klebeverbindung (29), insbesondere einen Klebestreifen (29a, 29b, 29c, 29d), miteinander verbunden sind.

14. Sicherheits- und/oder Rettungszeichenleuchte nach Anspruch 13, **dadurch gekennzeichnet, dass** die Klebeverbindung (29) zumindest zwischen der Ausnehmung (23) und der zweiten Schmalseite (3b) verläuft und/oder dass die Klebeverbindung (29) die Ausnehmung (23) geschlossen umläuft.

15. Sicherheits- und/oder Rettungszeichenleuchte nach einem der Ansprüche 1 bis 14, **dadurch gekennzeichnet, dass** die Ausnehmung (23) im Bereich der zweiten, unteren Schmalseite (3b) angeordnet ist.

16. Notbeleuchtungsanlage mit einer Sicherheits- und/oder Rettungszeichenleuchte (1) nach einem der Ansprüche 1 bis 15.
